# EUROPÄISCHE PATENTANMELDUNG

(11) **EP 0 827 972 A1**
(43) Veröffentlichungstag der Anmeldung: **11.03.1998**
(21) Anmeldenummer: 97111824.5
(22) Anmeldetag: 11.07.1997
(51) Int. Cl.: C08G 18/10

(54) **Lösemittelfreie wärmehärtende 1K-Beschichtungsmaterialien**

(30) Priorität: 04.09.1996 DE 19635771
(71) Anmelder: HÜLS AKTIENGESELLSCHAFT, 45764 Marl (DE)
(72) Erfinder: Lomölder, Rainer, Dr., 48153 Münster (DE); Speier, Peter, 45768 Marl (DE)

(57) **Zusammenfassung**

Wärmehärtendes 1K-Beschichtungsmaterial mit einer Viskosität bei 60 °C von 1000 - 50000 mPas, im wesentlichen enthaltend
A) 85 - 96 Gew.-% mindestens ein isocyanurat- und urethangruppenhaltiges Isocyanatprepolymer,
B) 4 - 12 Gew.-% feinteiliges Melamin mit einem mittleren Partikeldurch messer von 1 - 30 µm,
C) 0 - 3% Gew.-% Hilfsmittel.

## Beschreibung

Lösemittelfreie wärmehärtende 1K-Beschichtungsmaterialien zur Glasbeschichtung sind bekannt.

DE-OS 23 64 157 beschreibt die Verwendung von Urethan-Prepolymeren mit mindestens zwei Isocyanatgruppen, die eine feste Substanz enthalten, die bei Wärmezufuhr in der Lage mit Isocyanaten zu reagieren. Als Polyole zu Bildung des Urethanprepolymeren sind lineare Polyester- und Polyetherdiole und niedermolekulare Kettenverlängerer wie Butandiol, Trimethylhexandiol oder niedermolekularer, verzweigender Komponenten wie Trimethylolpropan (TMP) eingesetzt. Als Isocyanatkomponente werden ausschließlich Diisocyanate genannt

EP-A 0 025992, EP-A 0 025994 beschreiben ebenfalls die Verwendung von Beschichtungssystemen auf Basis von Isocyanatprepolymeren und in ihnen dispergiertem festem 2,4,6-Triamino-1,3,5-triazin (Melamin) als wärmeaktivierbarem Reaktionspartner zur Beschichtung von Glasflaschen. Dabei werden zur Herstellung des Isocyanatprepolymeren Polyolkomponenten auf Basis von Polyestern oder Polylactonen mit einer Funktionalität ≥ 2 und ausgewählte Diisocyanate eingesetzt. Ein wesentliches Merkmal dieser Anmeldungen ist eine verzweigende Oligomerisierung der Diisocyanate mit TMP.

Allen Anmeldungen ist gemeinsam, daß ausschließlich Diisocyanate zur Herstellung des Prepolymeren Verwendung finden und daß die Oligomerisierung bzw. Verzweigung der Diisocyanatkomponente über Urethanbildung erfolgt

Die Beschichtungssysteme führen, auf Glassubstraten aufgebracht und ausgehärtet, zu einem hervorragenden Berst- und Splitterschutz des Glases.

Die Aushärtung der Beschichtungen erfolgt bei Temperaturen > 180 °C, zur Einstellung kurzer Härtungszeiten bei Temperaturen > 220 °C.

Nachteilig bei allen o. g. Varianten ist, daß die Beschichtungen längere Zeit - in der Regel mehrere Tage - nach der Wärmehärtung zur Ausbildung einer hohen Waschlaugenbeständigkeit, wie sie z. B. auf dem Getränkeflaschensektor gefordert wird, benötigen. Die mangelnde Waschlaugenbeständigkeit äußert sich in einem Angriff der Beschichtungsoberfläche, der irreversibel ist die Flaschen sind anschließend unbrauchbar. Eine mehrtägige, unter Umständen nicht klar zu definierende Zwischenlagerung beschichteter Flaschen vor Laugenbeanspruchung ist unerwünscht und ökonomisch nicht vertretbar.

Aufgabe war es daher, mit einem neuen lösemittelfreien, wärmehärtenden Beschichtungsmaterial den Nachteil der sich erst langsam nach der Wärmehärtung einstellenden Laugenbeständigkeit zu überwinden ohne Beeinträchtigung der bewährten mechanischen Eigenschaften von Beschichtungen des Standes der Technik

Überraschend wurde gefunden, daß die Verwendung isocyanuratgruppenhaltiger Polyisocyanate zur Herstellung der Isocyanatprepolymere anstelle einer Kombination aus kurzkettigen Kettenverlängerern oder kurzkettiger verzweigender Triole und Diisocyanaten die oben genannten Nachteile überwindet unter Beibehaltung des bewährten mechanischen Eigenschaftsprofils.

Gegenstand der vorliegenden Erfindung ist daher ein wärmehärtendes 1K-Beschichtungsmaterial mit einer Viskosität bei 60 °C von 1000 - 50000 mPas, im wesentlichen enthaltend
A) 85 - 96 Gew.-% mindestens ein isocyanurat- und urethangruppenhaltiges Isocyanatprepolymer,
B) 4 - 12 Gew.-% feinteiliges Melamin mit einem mittleren Partikeldurchmesser von 1 - 30 µm,
C) 0-3 % Gew.-% Hilfsmittel.

Derartige Beschichtungssysteme eignen sich zur Beschichtung von Glas, insbesondere von Glasflaschen, bei Temperaturen von 180-300 °C, wobei das Glas zur Haftungsverbesserung mit einem Haftvermittler vorbehandelt sein kann.

Zur Herstellung des erfindungsgemäßen Beschichtungsmaterials werden isocyanuratgruppenhaltige Polyisocyanate eingesetzt. Isocyanuratgruppenhaltige Polyisocyanate werden durch katalytische Trimerisierung, die gemäß dem Stand der Technik unter Verwendung von Katalysatoren und Bedingungen wie sie z. B. im Journal für Prakt. Chemie, 336 (1994), 185-200, in DE-OS 29 16 201 oder in DE-P 26 31 733 beschrieben sind, gewonnen. Die monomeres Diisocyanat enthaltenden Rohprodukte können über eine Dünnschichtdestiliation entmonomerisiert werden, allerdings sind auch die Rohprodukte zur Herstellung des erfindungsgemäßen Beschichtungsmaterials geeignet. Weiterhin können auch Produkte eines Trimerisierungsprozesses von Diisocyanatgemischen, wie z.B in DE-A 30 33 860 beschrieben, als isocyanuratgruppenhaltige Polyisocyanate eingesetzt werden.

Die aus der Trimerisierung gewonnenen, entmonomerisierten Produkte oder auch die undestillierten Rohprodukte können weiterhin zur Optimierung des Eigenschaftsprofils der erfindungsgemäßen Beschichtungsmasse mit anderen Diisocyanaten oder isocyanuratgruppenhaltigen Polyisocyanaten kombiniert werden.

Prinzipiell sind die in der Polyurethantechnologie üblichen Diisocyanate wie die aromatischen TDI, MDI oder die (cyclo-)aliphatischen Diisocyanate wie H-MDI (4,4'- und 2,4'-Dicyclohexylmethandiisocyanat), HDI (Mexamethylendiisocyanat), IPDI (Isophorondiisocyanat), TMDI (2,2,4- bzw. 2,4,4-trimethylhexamethylendiisocyanat), TMXDI (α,α,α',α'-Tetramethylxylylendiisocyanat), MPDI (2-Methylpentandiisocyanat-1,5) zur Herstellung der isocyanuratgruppenhaltigen Polyisocyanate geeignet, wobei die aromatischen Diisocyanate aufgrund ihrer geringen Wetterstabilität und der Vergilbungsneigung weniger bevorzugt sind. Besonders bevorzugt sind isocyanuratgruppenhaltige Polyisocyanate auf Basis von IPDI.

Die erfindungsgemäß zur Herstellung der isocyanurat- und urethangruppenhaltigen Isocyanatprepolymere einzusetzenden isocyanuratgruppenhaltigen Polyisocyanate weisen einen NCO-Gehalt von 16-35 Gew.-%, eine mittlere Funktionalität von 2,4-4 und einen Gehalt an isocyanuratbasierenden Polyisocyanaten von 30-100 Gew.-% auf

Die Herstellung der erfindungsgemäßen isocyanurat- und urethangruppenhaltigen Isocyanatprepolymeren erfolgt durch Umsetzung der isocyanuratgruppenhaltigen Polyisocyanate mit Polyolen einer mittleren Funktionalität von 2-4 und einem OH-Äquivalentgewicht von 100-700, wobei das Verhältnis von OH- zu NCO-Gruppen 1:2 -1:4 beträgt. Die Umsetzung erfolgt bei 20-120 °C, ggf. unter Verwendung von in der Urethanchemie gängigen Katalysatoren wie tert. Aminen, Sn-, Zn- oder Bi-Verbindungen. In einer bevorzugten Herstellungsvariante liegt in Teilen der Polyolkomponente das feinteilige Melamin bereits dispergiert vor. Als Polyole können Polyether-, Polyester- und Polycarbonat-basierende Polyole eingesetzt werden. Zur Einstellung eines optimalen Eigenschaftsprofils kann es erforderlich sein, das mittlere Molekulargewicht der Polyolkomponente durch Abmischen der Polyole mit niedermolekularen Glycolen, wie sie zur Copolyestersynthese verwendet werden, einzustellen.

Erfindungsgemäß bevorzugte Polyether sind Polyadditionsprodukte von Alkylenoxiden wie z. B. Ethylenoxid, Propylenoxid oder Tetrahydrofuran unter Verwendung eines di- oder trifunktionellen Startermoleküls wie z. B. Wasser, Ethylenglycol, Propylenglycol, 1,4-Butandiol oder Trimethylolpropan Besonders bevorzugt aus der Gruppe der Polyether sind jedoch Polytetramethylenetherdiole, auch als Copolymerisate mit Caprolactonen, wie sie z. B. unter der Bezeichnung poly-THF (BASF AG) oder TERATHANE (DuPont) vertrieben werden.

Erfindungsgemäße Polyesterpolyole zur Herstellung des isocyanurat- und urethangruppenhaltigen Isocyanatprepolymers sind Copolykondensate von zweiwertigen aliphatischen oder aromatischen Carbonsäuren oder -estern und zwei- oder mehrwertigen Alkoholen. Beispielhafte Dicarbonsäuren sind Bernsteinsäure Glutarsäure, Adipinsäure, 2,2,4- und 2,4,4- Trimethyladipinsäure, Azelainsäure, Dodecandisäure, Phthalsäure, Isophthalsäure, Terephthalsäure, als zwei- oder mehrwertige Alkohole eignen sich z. B. Ethylenglycol, Propylenglycol, 1,4-Butandiol, 1,6-Hexandiol, 3-Methylpentandiol, 2,2,4- und 2,4,4-Trimethylhexandiol, Decandiol, Neopentylglycol, 1,4-Bishydroxymethylcyclohexan und Trimethylolpropan.

Als Polyester werden auch Polycaprolactone wie sie unter der Bezeichnung TONE (Union Carbide Corp.) oder CAPA (Solvay) marktverfugbar sind, betrachtet.

Als erfindungsgemäß verwendbare Polycarbonate sind Umsetzungsprodukte niedermolekularer Diole mit Diarylcarbonaten wie z B. Diphenylearbonat, cycl. Carbonaten oder Phosgen. Als geeignete Diole sind Propandiol-1,3, Butandiol-1,4, 3-Methylpentandiol-1,5, Hexandiol-1,6, 2,2,4- oder 2,4,4-Trimethylhexandiol, Diethylenglykol, Triethylenglycol, Tetraethylenglykol oder Gemische dieser Diolkomponenten genannt.

Von den prinzipiell zur Herstellung des erfindungsgemäßen isocyanurat- und urethangruppenhaltigen Isocyanatprepolymers geeigneten Polyolen sind Polytetramethylenetherglycole und Polyester besonders bevorzugt.

Das Beschichtungsmaterial kann auch, falls der Einsatzzweck es erfordert, Harnstoffgruppen im Isocyanatprepolymer enthalten. Harnstoffgruppen werden gemäß dem Stand der Technik durch Verwendung von mindestens difunktionellen Aminverbindungen bei der Prepolymersynthese eingeführt.

Das erfindungsgemäße Beschichtungsmaterial enthält 4 - 12 % feinteiliges Melamin (2,4,6-Triamino-1,3,5-triazin) mit einem durchschnittlichen Partikeldurchmesser von 1 - 30 µm.

Die Herstellung der Beschichtungsmasse und die Einarbeitung des feinteiligen Melamins kann nach den in EP-A 25992, 25994 beschriebenen Einstufen- oder Zweistufenverfahren erfolgen. Im Einstufenverfahren wird zunächst das isocyanurat- und urethangruppenhaltige Isocyanatprepolymer durch Umsetzung der Polyole mit dem isocyanuratgruppenhaltigen Polyisocyanat hergestellt und anschließend mit feinteiligem Melamin versetzt. In einer anderen Variante des Einstufenverfahrens wird das feinteilige Melamin zunächst dem isocyanuratgruppenhaltigen Polyisocyanat zugesetzt und anschließend die Polyole zugegeben.

Bevorzugt wird jedoch das Zweistufenverfahren benutzt, in dem zunächst ein isocyanurat- und urethangruppenhaltiges Isocyanatprepolymer durch Umsetzung von 30-70 Gew.-% der einzusetzenden Polyolkomponente mit dem isocyanuratgruppenhaltigen Polyisocyanat hergestellt wird und anschließend 70-30 Gew.-% der Polyolkomponente, in der die Gesamtmenge des feinteiligen Melamins vorliegt, zugegeben. Die Umsetzung des Polyols mit dem Polyisocyanat wird bei Temperaturen zwischen 20-120 °C vorgenommen, die Reaktion über den titrimetrisch ermittelbaren NCO-Gehalt kontrolliert und bis zum theoretischen NCO-Gehalt durchgeführt. Nach Beendigung der Reaktion kann das Beschichtungsmaterial im Vakuum entgast werden.

Erfindungsgemäß kann das Beschichtungsmaterial bis zu 3 Gew-% Hilfsmittel enthalten, wie sie in der Lack- und Beschichtungstechnologie üblich sind Unter Hilfsmittel sind Verlaufshilfen wie z. B. Silicone, fluorhaltige Verbindungen wie z. B. FC 430 d. Fa. 3M, Acrylatcopolymerisate, hochsiedende Komponenten, Katalysatoren wie in der Urethanchemie üblich wie beispielhaft tert. Amine, Zn-, Ca-, Sn(II)-, und Dialkyl- oder Monoalkyl-Sn(IV)-Carboxylate z. B. der Essigsäure, 2-Ethylhexansäure, Dodecansäure, Ricinolsäure oder Bi-Salze, ferner UV-Absorber vom z. B. Benzotrialzol-, Oxanilid- oder S-Triazin-Typ und Oxidationsstabilisatoren vom z.B. HALS-, sterisch gehinderter Phenoltyp oder aus der Gruppe der Phosphor- oder Phosphorigsäureester, sowie Entschäumer.

Das erfindungsgemäße Beschichtungsmaterial wird bei 40 - 100 °C durch Gießen und/oder Walzen aufgetragen. Der Glaskörper kann vorteilhaft mit einem Haftvermittler auf Basis organofunktionaler Silane vorbehandelt und auf 40 - 120 °C vorgewärmt sein. Die Schichtdicken nach Härtung können 50 - 350 µm betragen.

Die Aushärtung erfolgt bei Temperaturen > 180 °C, günstigerweise im Temperaturbereich 220 - 300 °C.

### Beispiele:

Die in den Beispielen angegebenen Teile beziehen sich aufdas Gewicht.

### Beispiel 1:

49,1 g des Isocyanurat-Polyisocyanates von Isophorondiisocyanat (VESTANAT T 1890, Hüls AG) werden unter Erwärmen in 50,1 g Isophorondiisocyanat gelöst. Der NCO-Gehalt des isocyanuratgruppenhaltigen Polyisocyanates beträgt 27,4 %.

47,9 g des isocyanuratgruppenhaltigen Polyisocyanates werden mit 0,003 g Dibutylzinndilaurat versetzt und auf 60 °C erwärmt. Unter Rühren werden portionsweise 27.3 g eines Gemisches aus Polytetramethylenetherglykol MW 1000 und 650 (65:35) zudosiert. Nach erfolgter Dosierung wird die Reaktionsmischung für 1 h bei 60 °C gehalten, bis der NCO-Gehalt 14 Gew.-% beträgt Anschließend erfolgt die portionsweise Zugabe von 24,7 g einer Mischung aus 7,5 g feinteiligem Melamin mit einem durchschnittlichen Partikeldurchmesser von 5 µm in 17,4 g der Mischung aus Polytetramethylenetherglykol 1000 und 650. Nach Zugabe wird 2 h bei 60 °C nachgerührt bis der NCO-Gehalt 8,8 Gew.-% beträgt.

Die Viskosität bei 60 °C beträgt 9500 mPas.

### Vergleichsbeispiel:

44,4 g Isophorondiisocyanat werden mit 0,003 g Dibutyizinndilaurat versetzt und auf 65 °C erwärmt. Portionsweise werden 3,8 g Trimethylolpropan (TMP) zugegeben. Nach vollständiger Auflösung von TMP wird 1 h auf 95 °C erwärmt, anschließend auf 60 °C abgekühlt und 24,9 g des Gemisches aus Polytetramethylenetherglykol 650 und 1000 (35:65) zudosiert. Nach einer Nachreaktionszeit von 1 h bei 60 °C beträgt der NCO-Gehalt 14,7 %. Anschließend werden 26,8 g einer Mischung von 8 g feinteiligem Melamin (mittlerer Partikeldurchmesser: 5 µm) in 18,9 g der Mischung aus Polytetramethylenetherglykol 650 und 1000 portionsweise zugegeben. Man läßt 3 h bei 70 °C nachreagieren, der NCO-Gehalt beträgt dann 8,8 Gew.- %.

Die Viskosität bei 60 °C beträgt 6500 mPas.

Die Beschichtungsmaterialien werden mit einer Rakel auf silanisierte Glasplatten aufgetragen, so daß die Filmstärken nach Härtung 150 µm betragen. Die Härtung erfolgt in einem pre-finish-Ofen (Drehtellerofen) 4,5 min bei 240 °C.

### Vergleich der mechanischen Daten:

| | Beispiel 1 | Vergleichsbeispiel |
|---|---|---|
| Reißdehnung (%) | 260 | 270 |
| Reißfestigkeit (N/mm²) | 26,8 | 29,3 |

Die beschichteten Platten werden nach verschiedenen Zwischenlagerungszeiten 3 h in einer Waschlauge (1,6 % NaOH, 0,25 % Additiv VR 1220/42 d. Fa. Henkel-Ecolab) bei 80 °C gelagert, mit Leitungswasser abgewaschen und nach 30 min visuell beurteilt.

| | Zeitpunkt Laugentest *) | | |
|---|---|---|---|
| | direkt nach Härtung | 1 d nach Härtung | 4 d nach Härtung |
| Beispiel 1 | 2 - 3 | 1 - 2 | 1 |
| Vergleichsbeispiel | 5 | 4 - 5 | 2 - 3 |

| | | | |
|---|---|---|---|
| *): Beurteilung: 1 = unverändert, 2 = kaum sichtbarer Angriff 3 = sichtbarer Angriff Oberfläche trübe, 4 = starker Angriff, weiße Oberfläche, 5 = sehr starker Angriff | | | |

Der Unterschied zwischen Beispiel 1 und dem Vergleichsbeispiel zeigt die vorteilhafte Verwendung von isocyanuratgruppenhaltigen Polyisocyanaten statt einer Kombination aus kurzkettiger Verzweigung (TMP) und Diisocyanaten (Vergleichsbeispiel) unter Beibehaltung der mechanischen Daten der Beschichtung.

## Patentansprüche

1. Wärmehärtendes 1K-Beschichtungsmaterial mit einer Viskosität bei 60 °C von 1000 - 50000 mPas, im wesentlichen enthaltend
A) 85 - 96 Gew.-% mindestens ein isocyanurat- und urethangruppenhaltiges Isocyanatprepolymer,
B) 4- 12 Gew.-% feinteiliges Melamin mit einem mittleren Partikeldurch messer von 1 - 30 µm,
C) 0-3 % Gew.-% Hilfsmittel

2. Wärmehärtendes 1K-Beschichtungsmaterial gemäß Anspruch 1,
dadurch gekennzeichnet
daß zur Herstellung des isocyanurat- und urethangruppenhaltigen Isocyanatprepolymers Polyole mit einer mittleren Funktionalität von 2 - 4 und einem OH-Äquivalentgewicht von 100 - 700 sowie isocyanuratgruppenhaltige Polyisocyanate mit einer mittleren Funktionalität von 2,4 - 4, einem freien NCO-Gehalt von 16 - 35 Gew.-% und mit einem Gehalt isocyanuratbasierender Polyisocyanate von 30 - 100 Gew.-% eingesetzt werden, das Verhältnis von OH- und NCO-Gruppen bei der Herstellung von A) zwischen 1:2 und 1:4 variiert, der freie NCO-Gehalt des Beschichtungsmaterials 5 - 15 Gew.-% und das Verhältnis der Summe der isocyanatreaktiven Gruppen des Melamins und den freien Isocyanatgruppen 1:0,9 - 1:1,3 beträgt.

3. Wärmehärtendes 1K-Beschichtungsmaterial gemäß den Ansprüchen 1 bis 2,
dadurch gekennzeichnet
daß zur Herstellung des Isocyanatprepolymers A
a) Polyole aus der Gruppe der Polyester-, Polyether- oder Polycarbonatpolyole und
b) isocyanuratgruppenhaltige Polyisocyanate auf Basis (cyclo-) aliphatischer Diisocyanate aus der Gruppe H-MDI (4,4'. und 2,4'-Dicyclohexylmethandiisocyanat), HDI (Hexamethylendiisocyanat), IPDI (Isophorondiisocyanat), TMDI (2,2,4- bzw. 2,4,4-Trimethylhexamethylendiisocyanat), TMXDI (α,α,α',α'-Tetramethylxylylendiisocyanat), MPDI (2-Methylpentandiisocyanat-1,5)
eingesetzt werden.

4. Wärmehärtendes 1K-Beschichtungsmaterial gemäß den Ansprüchen 1 bis 3,
dadurch gekennzeichnet,
daß zur Herstellung des Isocyanatprepolymers A
a) Polyesterpolyole oder Polytetramethylenetherglykole und
b) Polyisocyanate auf Basis von IPDI (Isophorondiisocyanat)
eingesetzt werden.

5. Wärmehärtendes 1K-Beschichtungsmaterial gemäß den Ansprüchen 1 bis 4,
dadurch gekennzeichnet,
daß als Hilfsmittel in der Beschichtungstechnologie übliche Hilfsmittel aus der Gruppe der Stabilisatoren, Katalysatoren, Entschäumer und Verlaufshilfen eingesetzt werden.

6. Wärmehärtendes 1K-Beschichtungsmaterial gemäß den Ansprüchen 1 bis 5,
dadurch gekennzeichnet,
daß die Komponente A zusätzlich Harnstoffgruppen aufweist

7. Verfahren zur Herstellung von Glasbeschichtungen,
dadurch gekennzeichnet,
daß ein wärmehärtendes 1K-Beschichtungsmaterial mit einer Viskosität bei 60 °C von 1000- 50000 mPas, im wesentlichen enthaltend
A) 85 - 96 Gew.-% mindestens eines isocyanurat- und urethangruppenhaltigen Isocyanatprepolymers,
B) 4 - 12 Gew.-% feinteiliges Melamin mit einem mittleren Partikeldurch messer von 1 - 30 µm,
C) 0 - 3 % Gew.-% Hilfsmittel
eingesetzt wird

8. Verwendung von wärmehärtenden 1K-Beschichtungsmaterialien gemäß den Ansprüchen 1 bis 6 zur Beschichtung von Glas.

9. Verwendung von wärmehärtenden 1K-Beschichtungsmaterialien gemäß den Ansprüchen 1 bis 6 zur Beschichtung von Glasflaschen.
